# NEUE EUROPÄISCHE PATENTSCHRIFT

(11) **EP 2 412 528 B2**
(45) Veröffentlichungstag und Bekanntmachung des Hinweises auf die Entscheidung über den Einspruch: **01.05.2019**
(45) Hinweis auf die Patenterteilung: 03.12.2014
(21) Anmeldenummer: 10171090.3
(22) Anmeldetag: 28.07.2010
(51) Int. Cl.: B41F 13/08, B41F 13/20, F16C 13/02, F16C 35/077

(54) **Verfahren zur Reparatur einer Walze**
Method for repairing a cylinder and cylinder
Procédé de réparation d'un cylindre et cylindre

(43) Veröffentlichungstag der Anmeldung: 01.02.2012
(73) Patentinhaber: Felix Böttcher GmbH & Co. KG, 50933 Köln (DE)
(72) Erfinder: Macfarlane, Graham, 53819 Neunkirchen-Seelscheid (DE); Pfeil, Thorsten, 50733 Köln (DE); Deussen, Jürgen, 50767 Köln (DE)
(74) Vertreter: dompatent von Kreisler Selting Werner - Partnerschaft von Patent- und Rechtsanwälten mbB

(56) Entgegenhaltungen:
- EP-A1- 1 918 065
- CA-A1- 2 556 291
- DE-A1- 1 400 319
- DE-A1- 3 329 537
- DE-A1- 4 003 798
- DE-A1- 4 102 975
- DE-A1- 4 314 082
- DE-A1- 10 340 261
- DE-B3-102005 048 781
- DE-T5-112006 000 264
- US-A- 3 749 463
- US-A- 5 062 721

## Beschreibung

Die Erfindung betrifft ein Verfahren zur Reparatur einer Walze.

Walzen sind rotationssymmetrische Körper, die in verschiedensten Bereichen der Technik verwendet werden, um Druck auf einen Werkstoff auszuüben. Sie werden zur Umformung von Materialien verwendet, aber auch in großem Umfang in Druckmaschinen zum Übertragen von Farben auf unterschiedlichste Körper. Die in Druckmaschinen verwendeten Walzen werden als Druckwalzen bezeichnet.

Walzen weisen einen zylindrischen Walzengrundkörper auf. In die beiden Stirnseiten des Walzengrundkörpers sind Lagersitzelemente eingesetzt. Die Lagersitzelemente dienen zur Aufnahme der äußeren Lagerringe von Wälzlagern zur Lagerung der Druckwalze. Die Wälzlager sind auf einer Achse oder Lagerzapfen , und den Lagersitzelementen angeordnet. Auf der Mantelfläche des Walzengrundkörpers ist je nach Einsatzgebiet der Druckwalze eine Beschichtung oder Bezüge aufgebracht. Als Bezüge sind beispielsweise Elastomere wie Gummi oder Polyurethan im Einsatz vorgesehen. Eine derartige bezogene Walze ist beispielsweise in DE 11 2006 000 264 T5 beschrieben.

DE 11 2006 000 264 T5 offenbart nämlich ein Verfahren zur Herstellung einer beschichteten Walze und eine nach diesem Verfahren hergestellte Walze, insbesondere zum Drucken und Formen, die Walze bestehend aus einem Walzengrundkörper bzw. einem Rohr aus Kunststoff-Verbundmaterial. Zu den beiden Enden des Rohres werden metallene Ansätze geklebt, welche als Lagersitzelemente ausgebildet sind, d.h. mit den Lagern der Druckmaschine zusammenarbeiten.

Aufgrund der hohen mechanischen Beanspruchung der Lagersitzelemente, die üblicherweise aus Metall, insbesondere Stahl hergestellt sind, ist es erforderlich, diese in regelmäßigen Abständen zu reparieren. Bei Walzengrundkörpern aus Metall kann die Reparatur der Lagersitzelemente derart erfolgen, dass die schadhaften Bereiche der Lagersitzelemente aufgeschweißt werden und sodann eine Oberflächenbearbeitung der Lagersitzelemente durch Ausdrehen erfolgt. Anschließend können neue Wälzlager in die Lagersitzelemente eingesetzt werden.

Seit ca. 15 Jahren werden Druckwalzen einsetzt, deren Walzengrundkörper aus einem Kunststoffmaterial, insbesondere einem Kunststoff-Verbundmaterial besteht. Hierbei handelt es sich insbesondere um kohlefaser- oder glasfaserverstärkte Kunststoff-Verbundmateriallen. Die insbesondere aus Metall, wie Stahl hergestellten Lagersitzelemente sind in die Endbereiche der zylindrischen Walzengrundkörper aus Kunststoff bzw. Kunststoff-Verbundmateriallen eingeklebt. Dies hat zufolge, dass diejenigen Flächen schadhafter Lagersitzelemente nicht durch Aufschweißen und anschließendes Ausdrehen repariert werden können, da bei dem Schweißvorgang ein starkes Erwärmen des Lagersitzelementes erfolgt. Hierdurch kann ein teilweises Lösen oder Beschädigen der Klebeverbindung zwischen dem Lagersitzelement und dem Walzengrundkörper auftreten. Ferner kann auch durch in den Walzengrundkörper eingebrachte hohe Temperaturen eine Veränderung der Struktur des Walzengrundkörpers auftreten. Da aus Sicherheitsgründen die Reparatur von Lagersitzelementen durch Aufschweißen bei Druckwalzen mit Walzengrundkörpern aus Kunststoff und Kunststoffverbundwerkstoffen nicht möglich ist, ist es erforderlich, die Lagersitzelemente vollständig auszutauschen. Dies ist insbesondere mit hohen Kosten verbunden. Ferner besteht beim vollständigen Entfernen der Lagersitzelemente die Gefahr des Beschädigens des Walzengrundkörpers, da die Klebeverbindung zwischen dem Lagersitzelement und dem Walzengrundkörper gelöst werden muss.

Aufgabe der Erfindung ist es ein Verfahren zur Reparatur einer Walze mit einem Walzengrundkörper aus Kunststoff oder Kunststoffverbundwerkstoffen zu schaffen, das kostengünstiger ist und/oder ein Beschädigen des Walzengrundkörpers vermieden ist.

Die Lösung der Aufgabe erfolgt erfindungsgemäß durch ein Verfahren gemäß Anspruch 1.

Bei dem erfindungsgemäßen Verfahren zur Reparatur einer Walze mit einem Walzengrundkörper aus Kunststoff oder Kunststoff-Verbundmaterial, wie kohlefaser- oder glasfaserverstärktem Kunststoff erfolgt in einem ersten Schritt ein spanabhebendes Bearbeiten der schadhaften Lagersitzelemente, die mit den beiden Endbereichen des Walzengrundkörpers durch Verkleben verbunden sind. Insbesondere erfolgt die spanabhebende Bearbeitung der Innenflächen der Lagersitzelemente durch Ausdrehen. Durch die spanabhebende Bearbeitung der Innenflächen der Lagersitzelemente erfolgt ein Entfernen der schadhaften Bereiche, so dass wieder ebene Innenflächen der Lagersitzelemente hergestellt sind. Anschließend erfolgt ein Einsetzen jeweils einer Buchse in die Lagersitzelemente. In die Buchsen werden sodann die äußeren Lagerringe der die Walze bzw. Druckwalze lagernden Wälzlager eingesetzt, so dass die Außenflächen der Lagerringe an den Innenflächen der Buchsen anliegen. Die Außenringe der Wälzlager werden in die Buchsen beispielsweise eingepresst. Durch das erfindungsgemäße spanabhebende Bearbeiten der Lagersitzelemente und das anschließende Einsetzen von Buchsen ist es erfindungsgemäß nicht mehr erforderlich, schadhafte Lagersitzelemente auszutauschen. Ferner ist es durch das erfindungsgemäße Verfahren nicht mehr erforderlich, die schadhaften Innenflächen der Lagersitzelemente durch Aufschweißen und anschließendes Ausdrehen zu reparieren. Hierdurch ist ein starkes Erwärmen der Lagersitzelemente, was zu Beschädigungen der Klebeverbindung zwischen der Lagersitzelementen und dem Walzengrundkörper und/oder zu Veränderungen der Struktur des Walzengrundkörpers führen kann, vermieden.

Um sicherzustellen, dass die die Walze bzw. Druckwalze tragenden Wälzlager koaxial ausgerichtet sind, werden in einer besonders bevorzugten Weiterbildung des erfindungsgemäßen Verfahrens, die Innenseiten der Buchsen bearbeitet. Durch eine entsprechende Bearbeitung, vorzugsweise durch Schleifen, Honen oder Ausdrehen oder eine andere spanabhebende Bearbeitung, werden koaxiale Buchsen-Innenseiten hergestellt. Hierdurch ist gewährleistet, dass auch die in die Buchsen eingesetzten Wälzlager koaxial angeordnet sind.

Es erfolgt ein Sichern der Buchsen in den Lagerstützelementen um ein Verdrehen oder axiales Herausrutschen der Buchsen zu vermeiden.

Erfindungsgemäß erfolgt ein Sichern der Buchsen durch das Vorsehen von Sicherungsstiften. Diese werden an der gemeinsamen Stirnseite des Lagersitzelementes und der eingesetzten Buchse vorgesehen. Hierzu werden vorzugsweise im wesentlichen axial verlaufenden Bohrungen vorgesehen, die teilweise innerhalb der Buchsen und teilweise innerhalb der zugehörigen Lagersitzelemente angeordnet sind. Eine Mittellinie der Bohrung verläuft somit vorzugsweise in der Grenzfläche zwischen der Außenseite der Buchse und der Innenfläche des Lagersitzelementes. Besonders bevorzugt ist es hierbei als Sicherungsstifte Gewindestifte vorzusehen, die in den entsprechenden Bohrungen eingeschraubt werden. Es ist jedoch auch möglich, die Sicherungsstifte in Bohrungen einzupressen.

Zur erneuten Reparatur einer Walze kann die Buchse ausgetauscht werden. Dies kann durch Ausdrehen der Buchse erfolgen, wobei es bevorzugt ist, die Buchse aus dem Lagersitzelement herauszunehmen. Dies ist möglich, da die Buchse über Sicherungsstifte, insbesondere Gewindestifte gesichert ist. Nach dem Entfernen der schadhaften Buchse erfolgt gegebenenfalls ein spanabhebendes Bearbeiten der Innenseite des Lagersitzelementes sofern auch dieses beschädigt ist. In diesem Fall wird dann eine neue Buchse mit einem größeren Außendurchmesser als die erste Buchse eingesetzt. Unabhängig davon, ob das Lagersitzelement erneut spanabhebend bearbeitet wird, erfolgt das Einsetzen der neuen Buchse entsprechend dem Einsetzen einer Buchse bei einer ersten Reparatur. Hierbei ist es bevorzugt, dass die Bohrungen für die Sicherungsstifte zu den ersten Bohrungen in Umfangsrichtung versetzt zu den alten Bohrungen angeordnet werden.

Zur Sicherung der Buchsen in den Lagersitzelementen weisen diese in bevorzugter Ausführungsform an gemeinsamen Stirnseiten der Buchse und des dazugehörigen Lagersitzelementes Bohrungen auf, in die Sicherungsstifte eingesetzt werden.

Gegebenenfalls weisen die Buchsen einen inneren Lageranschlag auf. Hierbei handelt es sich vorzugsweise um einen oder mehrere radial nach innen weisende Ansätze, wobei es bevorzugt ist, dass ein ringförmiger Ansatz vorgesehen ist. Sofern der in den ursprünglichen Lagersitzelementen vorgesehene Lageranschlag nicht schadhaft ist, können auch zylindrische Buchsen eingesetzt werden.

Bevorzugt handelt es sich bei den erfindungsgemäßen Walzen um Druckwalzen, d.h. Walzen zum Einsatz in Druckmaschinen.

Nachfolgend wird die Erfindung anhand bevorzugter Ausführungsformen unter Bezugnahme auf die anliegenden Zeichnungen näher erläutert.

Es zeigen:

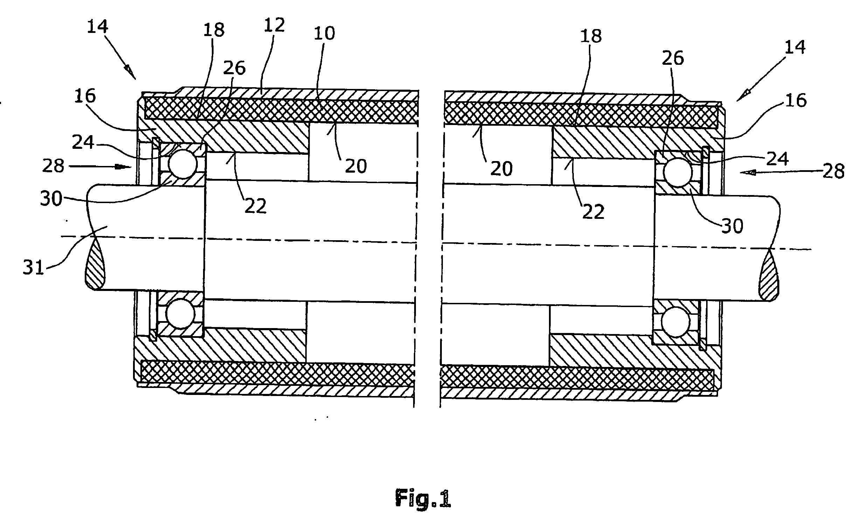

Figur 1 eine schematische Schnittansicht einer Walze vor der Reparatur,
Figur 2 eine schematische Schnittansicht einer Walze mit eingesetzter, im Wesentlichen zylindrischer Buchse und
Figur 3 eine schematische Schnittansicht einer Walze mit eingesetzter, im Wesentlichen zylindrischer Buchse, wobei die Buchse zusätzlich einen inneren Lageranschlag aufweist.

Eine Walze weist einen zylindrischen Walzengrundkörper aus Kunststoff oder Kunststoff-Verbundmaterial wie kohlenfaserverstärktem oder glasfaserverstärktem Kunststoff auf. Auf einer Mantelfläche des Walzengrundkörpers 10 ist eine Überzug 12 angeordnet. Diese ist je nach Einsatzbereich beispielsweise aus Gummi hergestellt. In die beiden Endbereiche 14 des Walzengrundkörpers 10 ist jeweils ein Lagersitzelement 16 eingesetzt. Das Lagersitzelement 16 ist üblicherweise aus Stahl hergestellt. Eine Außenseite 18 des Lagersitzelements 16 ist mit einer Innenseite 20 des Walzengrundkörpers 10 durch Verkleben verbunden. Innenseiten 22 der Lagersitzelemente 16 sind geschliffen ausbildet, so dass eine Innenfläche 24 ausgebildet ist, an der ein Außenring 26 eines Wälzlagers 28 anliegt. Die Innenringe 30 des Wälzlagers 28 sind auf einer die Druckwalze tragenden Achse 31 angeordnet.

Aufgrund der Abnutzung der Beschichtung 12 ist es erforderlich, diese regelmäßig zu ersetzen. Hierbei wird die Beschichtung 12 entfernt und durch eine neue Beschichtung ersetzt, wobei durch das Entfernen gegebenenfalls auch die Dicke des Walzengrundkörpers 10 verringert wird. Hierdurch folgt eine Schwächung des Grundkörpers und dann höhere Durchbiegung des Walzengrundkörpers 10 im Betrieb. Durch im Betrieb auftretenden hohen Belastungen der Wälzlager 28, die gegebenenfalls auch aufgrund der erhöhten Durchbiegung noch erhöht wird, ist es erforderlich die Wälzlager 28 ebenfalls in regelmäßigen Abständen auszuwechseln. Die hohen Belastungen führen dazu, dass die Innenflächen 24 der Lagersitzelemente 16 beschädigt werden.

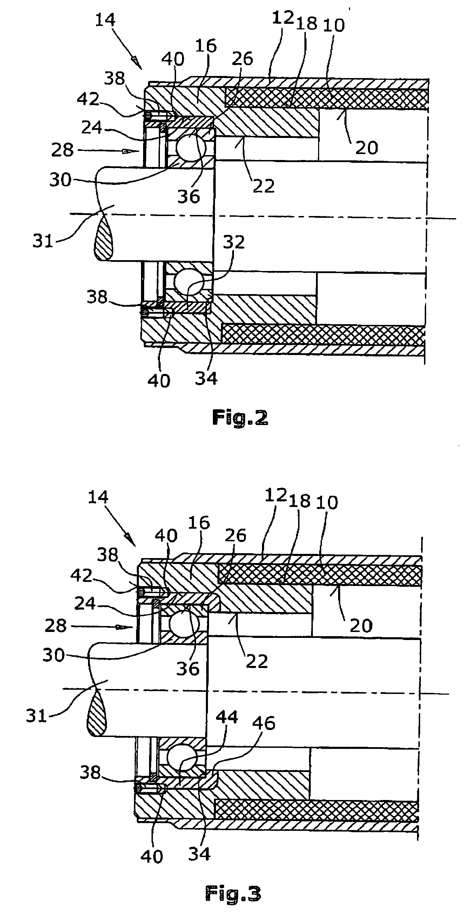

Erfindungsgemäß werden die schadhaften Innenflächen 24 durch spanabhebende Bearbeitung, insbesondere durch Ausdrehen repariert. Anschließend wird gemäß einer ersten Ausführungsform der Erfindung (Figur 2) in einen ausgedrehten Lagersitzelement 16 eine im Wesentlichen zylindrische Buchse 32 eingesetzt. In dem erfindungsgemäßen herstellten ersten Ausführungsbeispiel der Erfindung kann eine im Wesentlichen zylindrischen Buchse 32 vorgesehen werden, wenn ein innerer Lageranschlag 34 des Lagersitzelementes 16, an dem der äußere Lagerring 26 des Wälzlagers 28 anliegt, nicht beschädigt ist.

Nach dem Einsetzen der beiden im Wesentlichen zylindrischen Lagerbuchsen 32 werden die Buchseninnenflächen 36 beispielsweise ausgedreht oder geschliffen, so dass die beiden Buchseninnenflächen 36 zueinander koaxial sind. Hierdurch ist gewährleistet, dass die Hälz-bzw. Kugellager 28 im montierten Zustand ebenfalls koaxial zueinander sind.

Zur Sicherung der Buchsen 32 gegen Verdrehen oder axiales Verrutschen sind Sicherungsstifte 38 vorgesehen. Erfindungsgemäß sind beispielsweise jeweils zwei am Umfang der Buchsen 32 um 180° versetzte Stifte 38 vorgesehen. Zur Anordnung der Stifte 38 sind Bohrungen 40 vorgesehen. Die Bohrungen 40 sind in Richtung der gemeinsamen Stirnseiten 42 der Lagersitzelemente 16 und der Buchsen 32 offen. Insbesondere sind die Bohrungen mit Gewinden versehen, so dass als Sicherungsstifte 38 Gewindestifte eingeschraubt werden können. Dies hat den Vorteil, dass bei einer erneuten Reparatur die Buchsen 32 auf einfache Weise ausgewechselt werden können.

Sofern der innere Lageranschlag 34 ebenfalls beschädigt ist, werden Buchsen 44 (Figur 3) eingesetzt. Die Buchsen 44 weisen an ihrem nach innen weisenden Ende einen radialen nach innen weisenden, insbesondere ringförmig ausgebildeten Ansatz 46 auf. Der Ansatz 46 dient als Lageranschlag. Im Übrigen werden die Buchsen 44 entsprechend den Buchsen 32 in entsprechender Vorbereitung der Innenflächen 24 der Lagersitzelemente 16 eingesetzt und wiederum durch Stifte 38 fixiert.

## Patentansprüche

1. Verfahren zur Reparatur einer Walze mit einem Walzengrundkörper (10) aus Kunststoff oder einem Kunststoff-Verbundmaterial, wobei in die beiden Endbereiche (14) des Walzengrundkörpers (10) Lagersitzelemente (16) eingesetzt werden, die durch Verkleben mit dem Walzengrundkörper (10) verbunden sind, bei welchem schadhafte Lagersitzelemente (16) an einer Innenfläche (24) spanabhebend bearbeitet, insbesondere ausgedreht werden und in die Lagersitzelemente (16) jeweils eine Buchse (32,44) eingesetzt wird, deren Innenfläche (36) zur Aufnahme von äußeren Lagerringen (26), der die Walze lagernden Wälzlager (28) dient,
wobei die Buchsen (32,44) in den Lagersitzelementen (16) durch an Stirnseiten (42) eingesetzte Sicherungsstifte (38), insbesondere Gewindestifte fixiert werden.

2. Verfahren nach Anspruch 1, bei welchem die Innenseiten (36) der Buchsen (32, 44) nach dem Einsetzen in die Lagersitzelemente (16) bearbeitet werden, um koaxiale Buchsen-Innenseiten (36) herzustellen.

3. Verfahren nach Anspruch 1 oder 2, bei welchem die Sicherungsstifte (38) in Bohrungen (40) eingesetzt werden, die teilweise in den Buchsen (32,44) und teilweise in den Lagersitzelementen (16) angeordnet sind.

4. Verfahren nach einem der Ansprüche 1 bis 3, bei welchem zur erneuten Reparatur die Buchsen (32,44) ausgetauscht werden.

5. Verfahren nach Anspruch 4, bei welchem nach dem Entfernen der schadhaften Buchsen (32,44) das Lagersitzelement (16) spanabhebend bearbeitet, insbesondere ausgedreht und eine neue Buchse (32,44) mit größerem Außendurchmesser eingesetzt wird.

6. Verfahren nach Anspruch 4 oder 5, bei welchem neue Bohrungen (40) für Sicherungsstifte (38) in Umfangsrichtung versetzt zwischen alten Bohrungen (40) hergestellt werden.

## Claims

1. A method for repairing a roller having a roller base body made (10) of plastic or a plastic compound material, comprising the inserting of bearing seat members (16) into the two end regions (14) of the roller base body (10), said bearing seat members having been connected to the roller base body (10) by bonding, wherein damaged bearing seat members (16) are machined, particularly milled, on an inner surface (24) thereof, and, a respective sleeve (32,44) is inserted into the bearing seat members (16), the inner surface (36) of said sleeves serving for taking up outer bearing rings (26) of the roller bearings (28) supporting the roller, wherein the sleeves (32,44) are fixed in the bearing seat members (16) by securement pins (38), particularly threaded pins, which are inserted on end sides (42).

2. The method according to claim 1, wherein, after insertion into the bearing seat members (16), the inner sides (36) of the sleeves (32,44) are treated to produce coaxial sleeve inner sides (36).

3. The method according to claim 1 or 2, wherein the securement pins (38) are inserted into bores (40) arranged partially in the sleeves (32,44) and partially in the bearing seat members (16).

4. The method according to any one of claims 1 to 3, wherein, for renewed repair, the sleeves (32,44) are exchanged.

5. The method according to claim 4, wherein, after removal of the damaged sleeves (32,44), the bearing seat member (16) is machined, particularly milled, and a new sleeve (32,44) with a larger outer diameter is inserted.

6. The method according to claim 4 or 5, wherein new bores (40) for securement pins (38) are generated with circumferential displacement between old bores (40).

## Revendications

1. Procédé de réparation d'un rouleau comportant un corps de base (10) en matière synthétique ou en composite de matières synthétiques, procédé selon lequel dans les deux régions d'extrémité (14) du corps de base (10) du rouleau sont insérés des éléments de siège de palier (16) qui sont reliés par collage au corps de base (10) du rouleau, des éléments de siège de palier (16) défectueux étant usinés par enlèvement de copeaux, notamment alésés, au niveau d'une face intérieure (24) et dans chacun des éléments de siège de palier (16) étant inséré un coussinet (32, 44) dont la face intérieure (36) est destinée à recevoir des bagues de palier extérieures (26) des paliers à rouleaux (28) logeant les rouleaux,
les coussinets (32, 44) étant fixés dans les éléments de siège de palier (16) au moyen de goupilles de sécurité (38), notamment de goupilles filetées, insérées au niveau des faces frontales (42).

2. Procédé selon la revendication 1, selon lequel les faces intérieures (36) des coussinets (32, 44) sont usinées après l'insertion dans les éléments de siège de palier (16) afin de réaliser des faces intérieures de coussinets (36) coaxiales.

3. Procédé selon la revendication 2, selon lequel les goupilles de sécurité (38) sont insérées dans des perçages (40) qui sont partiellement ménagés dans les coussinets (32, 44) et partiellement dans les éléments de siège de palier (16).

4. Procédé selon l'une quelconque des revendications 1 à 3, selon lequel les coussinets (32, 44) sont remplacés en vue d'une nouvelle réparation.

5. Procédé selon la revendication 4, selon lequel après l'élimination des coussinets (32, 44) défectueux l'élément de siège de palier (16) est usiné par enlèvement de copeaux, notamment alésé, et un nouveau coussinet (32, 44) de diamètre extérieur plus grand est inséré.

6. Procédé selon la revendication 4 ou 5, selon lequel de nouveaux perçages (40) destinés à des goupilles de sécurité (38) sont réalisés entre d'anciens perçages (40) en étant décalés dans la direction circonférentielle.
